# EUROPÄISCHE PATENTSCHRIFT

(11) **EP 0 662 575 B1**
(45) Veröffentlichungstag und Bekanntmachung des Hinweises auf die Patenterteilung: **03.11.1999**
(21) Anmeldenummer: 94119299.9
(22) Anmeldetag: 07.12.1994
(51) Int. Cl.: F16K 3/18

(54) **Ventilmechanik mit Zwangsführung**
Forced guidance valve mechanism
Mécanisme de vanne avec guidage forcé

(30) Priorität: 08.12.1993 DE 4341816
(43) Veröffentlichungstag der Anmeldung: 12.07.1995
(73) Patentinhaber: Bösch, Hubert, 6890 Lustenau (AT)
(72) Erfinder: Bösch, Hubert, 6890 Lustenau (AT)
(74) Vertreter: Riebling, Peter, Dr.-Ing.

(56) Entgegenhaltungen:
- EP-A- 0 277 323
- CH-A- 402 537
- DE-A- 1 957 309
- DE-A- 2 601 120
- DE-B- N4 670
- DE-B- 1 190 755
- DE-C- 45 641
- DE-C- 636 317
- DE-C- 929 920

## Beschreibung

Die Erfindung betrifft eine Ventilmechanik nach dem Oberbegriff des Anspruchs 1.

Die DE-A-45641 zeigt ein Schieberventil ohne Rückholfeder, bei welchem das Öffnen und Schließen des Ventils mittels zwei zueinander senkrecht stehender Bewegungen des Ventiltellers berwerkstelligt wird. Hierbei wird die zum Ventilsitz parallele Bewegung mittels einer Ventilstange in Form einer Schraubenspindel durchtgeführt, wohingegen die zum Ventilsitz senkrechte Bewegung über zwei aufeinander gleitenden schrägen Flächen abläuft. Die Schraubenspindel ist hierbei mit einer, die parallele Bewegung ausführenden Mutter verbunden, wobei an dieser Mutter eine erste Schrägfläche angebracht ist. Auf dieser läuft eine zweite Schrägfläche, welche den Ventilteller mit Dichtung beinhaltet. Nachteil dieses Schieberventils ist die hohe Reibung beim Öffnen/Schließen zwischen Spindel und Mutter, Schrägfläche der Mutter und Schrägfläche des Ventiltellers und zwischen den jeweiligen Nasen des Ventiltellers und des Ventilgehäuses, welche die Trennung der parallelen und senkrechten Bewegung ermöglichen.

Ähnliche Ventile sind aus verschiedenen Druckschriften bekannt. So schildern beispielsweise die DE 30 28 786, die DE 32 24 387 und die US 4 495 966 Ventile, bei denen ein Schließen des Ventils über Kniehebel oder eine Kulisse erfolgt. Allerdings weisen diese Druckschriften den erheblichen Nachteil auf, daß die jeweiligen Ventilteller mit Hilfe von Rückholfedern zum Öffnen des Ventils gegeneinander gezogen werden. Bei größeren Druckunterschieden zwischen den einzelnen Seiten des Ventils müssen entweder sehr große Schließkräfte (Überdruck) oder sehr große Rückholkräfte (Unterdruck) realisiert werden.

Ähnliche Ventile sind in der EP 0 277 323, der US 3 397 862 und der JP 4-119278 A (Patent Abstracts of Japan) dargestellt, die alle mit Rückholfedern arbeiten und aus diesem Grund ebenfalls die obigen Nachteile aufweisen.

In der DE-OS 19 57 309 wird ein Ventil für Vakuumleitungen geschildert, bei dem das Öffnen und Schließen des Ventils teilweise mittels einer Zwangsführung erfolgt. Hier wird ein Betätigungselement senkrecht zur Bewegungsrichtung des Ventiltellers bewegt. Nachteilig bei dieser Führung ist, daß relativ große Berührflächen vorliegen und somit die gesamte Führung einem hohen Verschleiß unterworfen ist. Darüber hinaus ist der Ventilteller federnd ausgebildet, so daß beim Öffnen des Ventils zumindest teilweise auf das Prinzip der Rückholfedern zurückgegriffen wird.

In der Praxis ist es allerdings so gut wie unmöglich, ein Ventil mit einer Nennweite von 100 mm, das auf der einen Seite einem fast vollständigen Vakuum, auf der anderen Seite der normalen Atmosphäre ausgesetzt ist, mit Hilfe von Rückzugsfedern zu öffnen. Die benötigte Kraft beträgt etwa 800 N.
Die Rückholfedern, die ein derartiges Ventil öffnen müssten, weisen im wesentlichen zwei Nachteile auf:
1. Es wird sehr viel Platz benötigt.
2. Die Schließkräfte müssen zum Schließen des Ventils zusätzlich die Federkraft überwinden.

Aufgabe der Erfindung ist es daher, die gattungsgemäße Ventilmechanik so weiterzubilden, daß ein einwandfreies Öffnen und Schließen des Ventils möglich ist.

Erfindungsgemäss wird diese Aufgabe durch die Merkmale des Anspruchs 1 gelöst.

Dabei ist wesentlich, daß für die Bewegung des Tellers in die senkrechte Richtung eine Kulissenführung vorgesehen ist, die aus einer Achsen-Nuten-Verbindung mittelbar oder unmittelbar zwischen Ventilstange und Teller besteht. Auf Rückholfedern wird verzichtet. Erfindungsgemäss ergeben sich folgende Vorteile:
1. Verringerung der Schließkräfte
2. Robustere Bauweise
3. Mit Hilfe von Kulissenwechseln Anpassung an unterschiedliche Randbedingungen
4. Bei passender Ausbildung der Kulisse Selbsthemmung möglich.

Die geringeren Schließkräfte und die robustere Bauweise ergeben sich aus dem Wegfallen der Rückzugsfedern. Die Schließkräfte müssen lediglich noch den Widerstand des durchströmenden Mediums und die innere Reibung der Mechanik überwinden.

Gleichzeitig wird die ganze Anordnung robuster, da keine Zugfedern zum Öffnen des Ventils verwendet werden, die bei evtl. Überlastungen, z.B. dem unbeabsichtigten Öffnen eines Ventils, sehr schnell brechen.

Durch verschiedene Kulissenausbildungen, z.B. mit besonders flachen Winkeln oder einem oder mehreren Knicken, können die Ventil-Schließ-Schnelligkeit und die dazu nötige Schließkraft hervorragend an unterschiedliche Randbedingungen angepasst werden. Durch eine passende Ausgestaltung der Kulisse ist auch Selbsthemmung möglich.

In einer ersten Ausführungsform sind zwei einander gegenüberliegende Ventilteller vorgesehen, die an beiden Seiten der Mittelplatte angebracht sind. Aufgrund der Abstützung der Mittelplatte an den Ventiltellern kann auf eine zusätzliche Abstützung der Mittelplatte am Ventilgehäuse verzichtet werden. Allerdings ist es möglich, diese Abstützung vorzunehmen, um eine Anpassung des Ventils an extreme Belastungen zu erreichen.

In einer zweiten Ausführungsform der Erfindung ist lediglich ein Ventilteller vorgesehen, der über eine Mittelplatte betätigt wird. Die Mittelplatte stützt sich hierbei am Ventilgehäuse bzw. zugeordneten Führungsschienen ab.

In beiden Fällen werden starre Ventilteller verwendet.

Die Funktionsweise wird nun für die Ausbildungsform mit zwei Tellern beschrieben, wobei die Wirkungsweise bei nur einem Ventilteller dieselbe ist.

Die Kulissenführung ist bevorzugt so ausgebildet, daß die Mittelplatte mit mindestens einer Achse versehen ist, die in entsprechende Kulissen an den Ventiltellern eingreift. Die Kulissen weisen hierbei einen bestimmten Neigungswinkel gegenüber der Oberseite der Teller auf, um eine Verschiebung bewirken zu können. Die Teller und die Mittelplatte lassen sich vollständig aus der Durchtrittsöffnung für das Medium entfernen, so daß ein ungehinderter Durchfluß möglich ist. Zum Schließen des Ventils wird die Mittelplatte in Richtung zur Durchtrittsöffnung bewegt, also senkrecht zur Schließbewegung der Teller. Die Teller werden solange axial von der Mittelplatte mitbewegt, bis sie an einen geeigneten Anschlag stoßen. Bei einer weiteren Bewegung der Mittelplatte verschieben sich die Achsen der Mittelplatte in den Kulissen der Ventilteller und drücken diese an die vorgesehenen Dichtstellen. Zur Erhöhung der Genauigkeit kann eine vertikale Führung der Ventilteller bei dieser Schließbewegung vorgesehen sein.

Zum Öffnen wird die Mittelplatte zurückgezogen, wobei die Ventilteller mittels einer geeigneten Vorrichtung zunächst innerhalb der Durchtrittsöffnung gehalten werden und sich lediglich von der Schließstellung auf die Mittelachse der Mittelplatte zubewegen. Erst sobald die Ventilteller einen bestimmten Abstand von der Mittelplatte unterschreiten, löst diese Vorrichtung und ermöglicht eine Verschiebung der Ventilteller zusammen mit der Mittelplatte.

Zur Verringerung der Reibung an den Berührstellen zwischen den Achsen, Kulissen und Führungsnuten wird entweder eine Gleitbeschichtung oder das Anbringen von Lagern auf den Achsen oder eine Kombination vorgeschlagen. Durch diese Maßnahme wird die Betriebskraft des Ventils verringert, während die Lebensdauer steigt und der Verschleiß sinkt.

Im folgenden wird die Erfindung anhand von, zwei Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: einen Querschnitt durch das erfindungsgemässe Ventil in einer ersten Ausführungsform,
- Figur 2:: einen Schnitt aus Figur 1 längs der Linie C-C,
- Figur 3:: einen Schnitt aus Figur 1 längs der Linie B-B,
- Figur 4:: einen Schnitt aus Figur 1 länqs der Linie A-A,
- Figur 5:: Einzelheit X aus Figur 1, vergrößert.
- Figur 6:: eine Darstellung gemäß Fig. 1 einer zweiten Ausführungsform
- Figur 7:: einen Schnitt längs der Linie D-D in Fig. 6
- Figur 8:: eine perspektivische Ansicht eines Ventiltellers
- Figur 9:: eine perspektivische Ansicht der Mittelplatte mit den Führungsschienen gemäß der zweiten Ausführungsform
- Figur 10:: eine Ansicht in Richtung X aus Fig. 9
- Figur 11:: weitere Ausbildungsmöglichkeiten für die Nuten

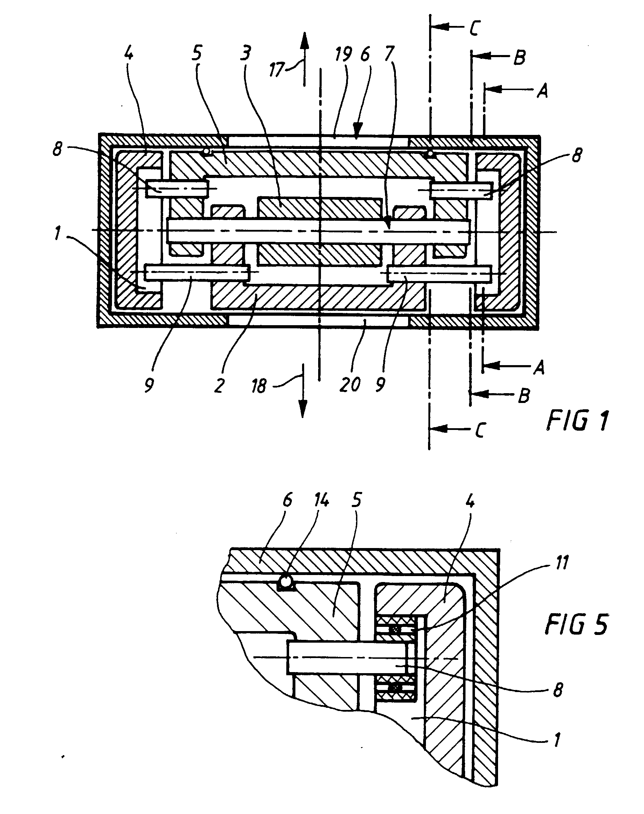

Figur 1 zeigt einen Querschnitt durch das erfindungsgemässe Ventil in einer ersten Ausführungsform.

Dabei ist ein Gehäuse 6 vorgesehen, das eine Einströmöffnung 19 sowie eine Ausströmöffnung 20 aufweist. Durch eine passende Ausgestaltung der Einbauteile 2, 3, 5 kann erreicht werden, daß das Ventil in beiden Richtungen durchströmt werden kann.

Seitlich in das Gehäuse eingesetzt sind Führungsschienen 4 mit Nuten 1. Darüber hinaus sind zwei Teller 2, 5 sowie eine Mittelplatte 3 vorgesehen.

Die Teller 2, 5 sind mit entsprechenden Wellen 9, 8 in den Nuten 1 der Führungsschienen 4 geführt. Dabei können eine oder mehrere Nuten oder Nutenabschnitte und entsprechend viele Wellen vorgesehen sein.

Die Mittelplatte 3 weist im gezeigten Ausführungbeispiel zwei Achsen 7 auf, die durch entsprechende Nuten 12, 13 in den Tellern 5, 2 hindurchgreifen. Selbstverständlich ist es bei guter Führung der Teller 2, 5 auch möglich, nur eine Achse 7 vorzusehen, oder es sind mehr als zwei Achsen vorhanden.

In dieser Figur 1 ist das Ventil geschlossen.

Zur Erhöhung der Dichtigkeit kann es vorgesehen sein, an einem oder beiden Tellern 2,5 geeignete Dichtungsmaterialien, wie z.B. O-Ringe 14, vorzusehen.

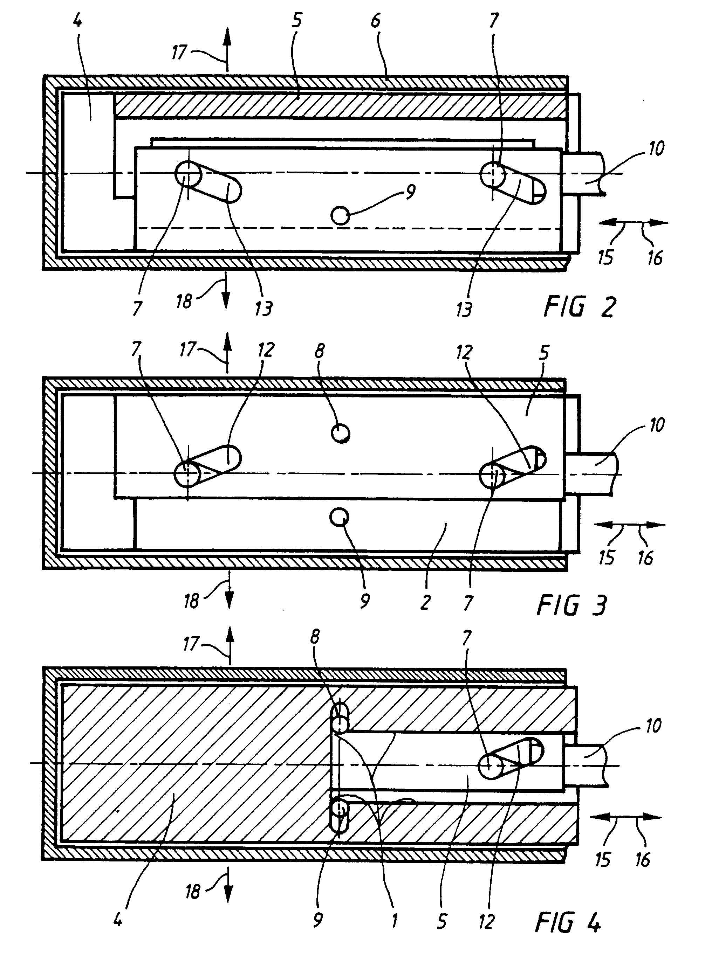

Die Figuren 2 - 4 zeigen drei verschiedene Längsschnitte durch das erfindungsgemässe Ventil.

Dabei ist vorgesehen, an der Mittelplatte 3 eine Ventilstange 10 anzubringen, die zum Öffnen und Schließen des Ventils dient. Die Betätigung der Ventilstange 10 sowie ihre Abdichtung gegenüber dem Gehäuse 6 sind nicht näher dargestellt.

In den Figuren 2 - 4 sind deutlich die Kulissenführungen erkennbar, die in Form von Nuten 12,13 an den jeweiligen Tellern 5, 2 ausgebildet sind. Die Teller 5, 2 sind dabei mit Wellen 8, 9 in der Nut 1 der Führungsschiene 4 gegen ein Verschieben in Pfeilrichtung 15, 16 gesichert, solange sie einen bestimmten Abstand von der Mittelplatte aufweisen (Fig. 4).

Somit ist sichergestellt, daß lediglich ein Verschieben der Teller 5,2 in den Pfeilrichtungen 17,18 stattfinden kann.

Das Öffnen des Ventils erfolgt nun folgendermassen:
Die Ventilstange 10 wird in Pfeilrichtung 16 verschoben. Damit bewegt sich auch die Mittelplatte 3, die an der Ventilstange 10 befestigt ist bzw. materialeinstückig mit ihr hergestellt ist, sowie die an der Mittelplatte 3 angebrachten Achsen 7 in Pfeilrichtung 16.

Die Teller 5,2 werden mit Hilfe der Wellen 8, 9 in den Nuten 1 der Führungsschienen 4 geführt und können daher noch nicht in Pfeilrichtung 15, 16 verrutschen. Die Umsetzung der Bewegung aus Pfeilrichtung 16 in die Richtungen 17, 18 erfolgt über die Achsen 7 der Mittelplatte, die in die Nuten 12,13 eingreifen. Sobald die Teller 2, 5 den notwendigen Halteabstand zur Mittelplatte 3 unterschreiten, also abgesenkt sind, gelangen die Wellen 8, 9 in den länglichen Abschnitt der Nut 1 der Führungsschienen 4, so daß die Teller 2, 5 zusammen mit der Mittelplatte 3 in Pfeilrichtung 15, 16 verschieblich sind (Fig. 4).

Danach werden sie zusammen mit der Mittelplatte 3 in Pfeilrichtung 16 aus dem Durchströmungsbereich des Ventils gezogen, so daß ein ungehinderter Durchtritt des Leitungsmediums möglich ist.

Ein Abstützen der Mittelplatte 3 zum Öffnen bzw. Schließen des Ventils ist nicht nötig. Die Mittelplatte 3 wird vielmehr von den Nuten 12,13 an den Tellern 5,2 in der Mitte gehalten, da diese Nuten 12,13 etwa gegengleich ausgebildet sind und daher eine automatische Zentrierung der Mittelplatte 3 herbeiführen. Es ist aber selbtverständlich möglich, eine Abstützung der Mittelplatte 3 an den Führungsschienen 4 oder anderen, eventuell zusätzlich vorgesehenen Anbauteilen, bei besonderen Einsatzfällen vorzunehmen. Diese Abstützung könnte durch eine Verlängerung der Achsen 7 bis hinein in eine Nut der Führungsschiene 4 erfolgen.

Zum Schließen des Ventils wird die Ventilstange 10 in Pfeilrichtung 15 eingeschoben, wobei sich die Wellen 8, 9 an dem senkrecht verlaufenden Teil der Nut 1 anlegen und somit eine weitere Bewegung der Teller 2, 5 in Richtung 15 verhindern. Wird die Mittelplatte weiter in diese Richtung bewegt, kehrt sich der oben beschriebene kinematische Prozeß um und die Teller 2, 5 werden in den Pfeilrichtungen 17, 18 nach aussen gedrückt.

Um eine leicht spielbehaftete Mittelplatte vorsehen zu können, die außer den Tellern 2, 5 keine weitere Führung benötigt, wird es bevorzugt, wenn der längliche Bereich der Nut 1 etwas größer ausgebildet ist als der Außendurchmesser der Wellen 8, 9 bzw. der auf diesen angebrachten Lager 11.

Dabei ist vorgesehen, die Wellen 8 drehfest und verschiebesicher im Teller 5 zu befestigen, ebenso die Wellen 9 im Teller 2 und die Achsen 7 in der Mittelplatte 3.

An den Kontaktstellen der Wellen 8, 9 sowie der Achsen 7 mit den entsprechenden Nuten 1 für die Wellen 8, 9 sowie den Nuten 12, 13 für die Achsen 7 sind Lager 11 vorgesehen, die in geeigneter Weise an den Wellen 8,9 bzw. an den Achsen 7 befestigt werden.

Von der vorliegenden Erfindung werden sämtliche geeigneten Lagersicherungen umfasst, also beispielsweise ein Aufpressen, ein Sichern mit Hilfe von Seegerringen oder mittels einer Durchmesseränderung der Welle bzw. der Achse. Aus Gründen der Übersichtlichkeit sind diese Lager in den Figuren 1 - 4 nicht dargestellt worden.

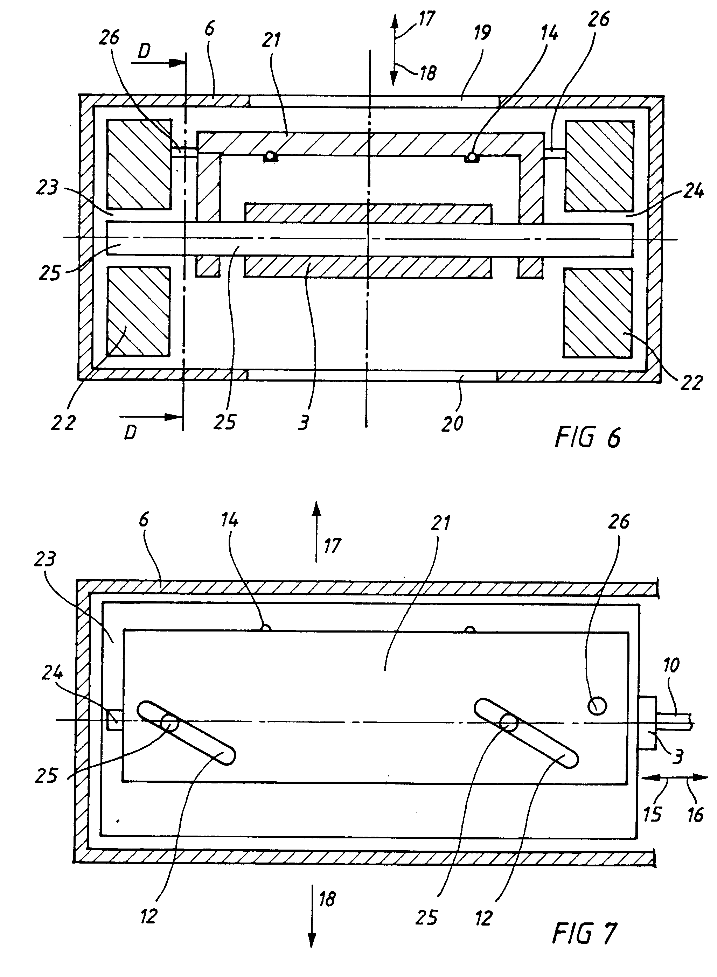

Figur 5 zeigt ein derartiges Lager 11, das auf der Welle 8 befestigt ist und in der Nut 1 der Führungsschiene 4 in Pfeilrichtung 17,18 auf- und ablaufen kann sowie in Richtung 15, 16 beweglich ist. Es ist vorgesehen, daß die Lager 11 sich mit ihrem äusseren Umfang direkt an der jeweiligen Nut 1,12,13 mit dem notwendigen Spiel abstützen.

Selbstverständlich ist es auch möglich, die Nuten und Achsen bzw. Wellen mit einer passenden Gleitbeschichtung zu versehen, um die Konstruktion auf diese Weise zu vereinfachen. Es ist auch möglich, sowohl die Lager 11 als auch eine Gleitbeschichtung gleichzeitig vorzusehen.

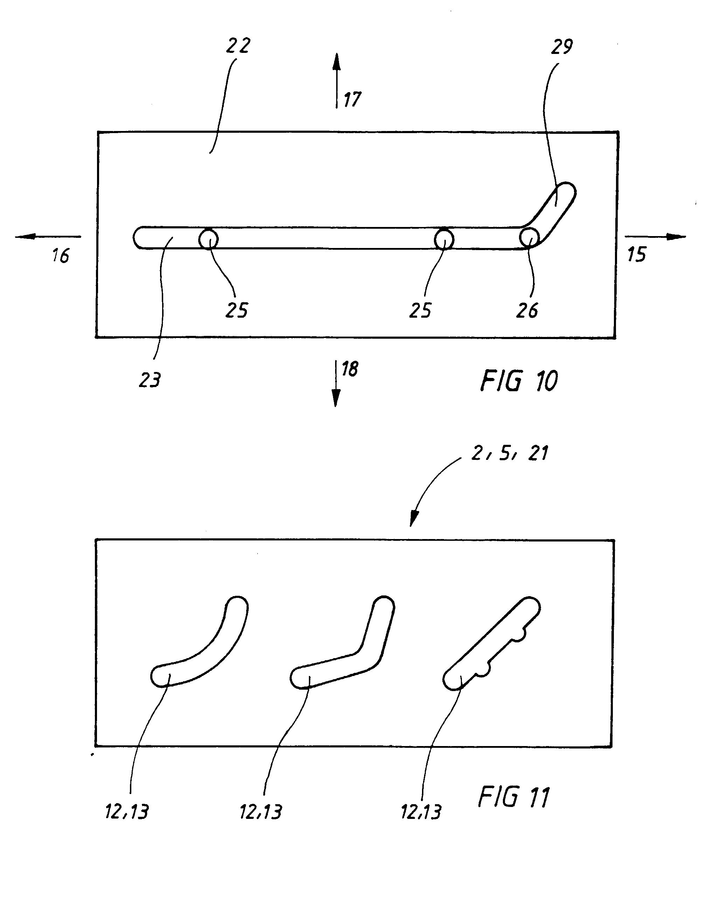

Die Nuten 12, 13, die zusammen mit den Achsen 7 für das Öffnen und Schließen des Ventils sorgen, können beliebig ausgebildet werden. Sie müssen nicht geradlinig verlaufen, sondern können einen oder mehrere Knicke oder eine Bogenform aufweisen. Mehrere Ausführungsmöglichkeiten für derartige Nutformen sind in Fig. 11 dargestellt, wobei der Übersicht halber die Darstellung in einem Teller erfolgte. Durch die Form dieser Nuten 12, 13 kann die Öffnungs- und Schließcharakteristik des Ventils bestimmt werden. Insbesondere ist es möglich, das Ventil an verschiedene, sehr unterschiedliche Randbedingungen anzupassen. Dabei müssen lediglich die in den Tellern 2, 5 angebrachten Nuten 13, 12 verändert werden. Alle wesentlichen Bauteile des Ventils können unverändert bleiben, was eine rasche und billige Anpassung an verschiedene Randbedingungen ermöglicht.

Die Nuten 12, 13 können darüber hinaus so ausgebildet werden, daß bei bestimmten Stellungen der Teller 2, 5 eine Selbsthemmung des Ventils auftritt. so daß ein weiteres Überwachen des Ventils nicht mehr nötig ist. Dies kann z.B. über Rasterungen oder entsprechende Steigungswinkel erfolgen.

Anstelle der Ventilstange 10 sind selbstverständlich auch andere Ventilmechanismen, z.B. hydraulisch, pneumatisch, magnetisch oder elektrisch, möglich. Damit kann eine Betätigung des Ventils auch von innerhalb des Gehäuses 6 angebrachten, nicht näher dargestellten Stellelementen erreicht werden.

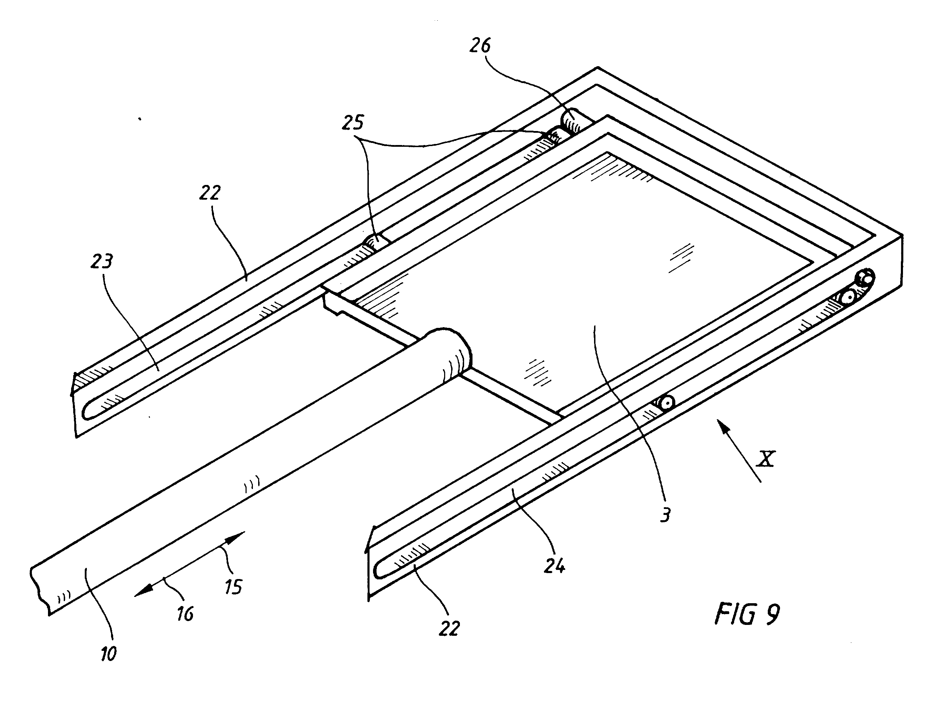

In den Fig. 6 - 10 wird eine zweite Ausführungsform des erfindungsgemäßen Ventils dargestellt. Hierbei werden für gleiche Bauteile wie in den Fig. 1 - 5 auch dieselben Bezugszeichen verwendet.

Gemäß Fig. 6 ist nur ein Teller 21 vorgesehen, der in Analogie zur ersten Ausführungsform von einer Mittelplatte 3 mit einer Ventilstange 10 betätigt wird. Die Mittelplatte 3 durchgreift hierbei mit den Achsen 25 die im Teller 21 angebrachten Nuten 12 und stützt sich mit den Enden der Achsen 25 jeweils links und rechts in zugeordneten Nuten 23,24 von Führungsschienen 22 ab.

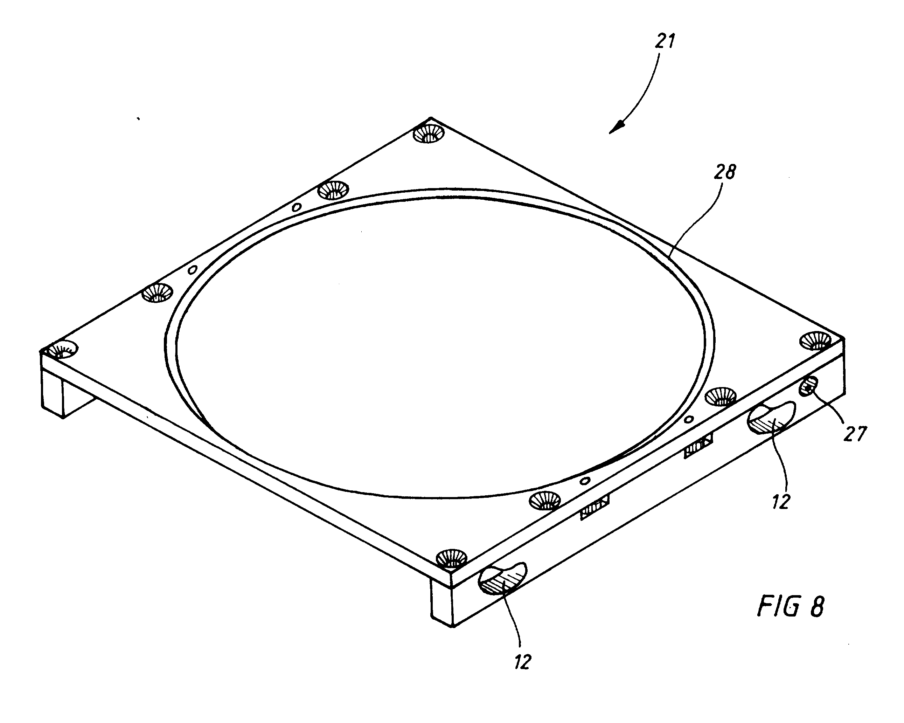

Zur zusätzlichen Lagesicherung und als Anschlag weist der Teller 21 an jeder Seite einen oder mehrere Wellen 26 auf, die bevorzugt wie die Achsen 25 in die Nuten 23, 24 eingreifen oder für die zusätzliche Nuten vorgesehen sind. Die Wellen 26 sind hierbei in Aufnahmen 27 des Tellers 21 gehalten (Fig. 8). An seiner Oberseite weist der Teller 21 eine Ringnut 28 zur Aufnahme eines O-Rings 14 auf.

Das Öffnen und Schließen der zweiten Ausführungsform erfolgt in Analogie zur ersten Ausführungsform über eine Verschiebung der Mittelplatte 3 duch die Ventilstange 10 in Pfeilrichtung 15, 16. Das oben Gesagte hinsichtlich der Art und Ausbildung der Nuten in den Tellern und Führungsschienen und die entsprechenden Lager oder Beschichtungen gilt entsprechend auch für die zweite Ausführungsform.

Als Anschlag für die Führung des Tellers 21 ist gemäß Fig. 10 vorgesehen, die Nuten 23, 24 an einem Ende mit einem ansteigenden Bereich 29 zu versehen, der aber auch wie in Fig. 4 senkrecht zur Nut ausgeführt sein kann. Beim Schließen des Ventils, also beim Verschieben von Mittelplatte 3 und Teller 21 gelangt die Welle 26 in diesen Bereich 29 und verhindert eine weitere Verschiebung des Tellers 21 in Richtung 15. Beim Öffnen wirkt die Welle 26 wie bei der ersten Ausführungsform als Haltevorrichtung, bis der Teller 21 auf einen bestimmten Abstand zur Mittelplatte 3 abgesenkt ist, und gibt erst dann den Teller 21 zur Veschiebung in Pfeilrichtung 16 frei.

Durch die Zwangsführung der Teller 2, 5, 21 kann eine größere Robustheit der gesamten Anlage bei geringeren Schließkräften erreicht werden. Darüber hinaus ist eine sehr leichte Anpassung über die Änderung der Nuten 12,13 an unterschiedliche Randbedingungen möglich.

## Patentansprüche

1. Ventilmechanik, wobei einer oder mehrere bewegliche Teller (2,5,21) zum Abdichten eines Ventiles vorgesehen sind und bezüglich der Sitzfläche des Ventils im wesentlichen parallele (15,16) und senkrechte (17,18) Bewegungen jedes Tellers (2,5,21) während des Öffnens und Schließen erfolgen, wobei die Bewegung des Tellers (2,5,21) in die parallele Richtung (15,16) mittels einer Ventilstange (10) erfolgt und die Bewegung des Tellers (2,5,21) in die senkrechte Richtung (17,18) das Abheben des Tellers von der Ventilsitzfläche bzw. das Anpressen an die Ventilsitzfläche bewirkt,
dadurch gekennzeichnet, daß für die Bewegung des Tellers (2,5,21) in die senkrechte Richtung (17,18) eine Kulissenführung (1,7,8,9,12,14,23,24,25,26) vorgesehen ist, die aus einer Achsen-Nuten-Verbindung mittelbar oder unmittelbar zwischen Ventilstange und Teller (2,5,21) besteht.

2. Ventilmechanik nach Anspruch 1, dadurch gekennzeichnet, daß zum Verschieben des oder der Teller (2, 5; 21) eine verschiebliche Mittelplatte (3) vorgesehen ist.

3. Ventilmechanik nach Anspruch 2, dadurch gekennzeichnet, daß die Mittelplatte (3) mit einer oder mehreren Achsen (7; 25) in zugehörige Nuten (12, 13) jedes Tellers (2, 5; 21) eingreift.

4. Ventilmechanik nach Anspruch 3, dadurch gekennzeichnet, daß die Nuten (12, 13) jedes Tellers (2, 5; 21) gegenüber der Verschieberichtung (15, 16) der Mittelplatte (3) geneigt ausgebildet sind.

5. Ventilmechanik nach einem der Ansprüche 3 und 4, dadurch gekennzeichnet, daß die Nuten (12, 13) selbsthemmend in Zusammenspiel mit den Achsen (7; 25) und/oder mit einer oder mehreren Rasterungen versehen ausgebildet sind.

6. Ventilmechanik nach einem der Ansprüche 2-5, dadurch gekennzeichnet, daß jeder Teller (2, 5; 21) einen oder mehrere Anschläge (8, 9; 26) zur Hemmung seiner axialen Verschiebung in Richtung der Bewegungsrichtung (15, 16) der Mittelplatte (3) beim Beginn des Öffnens und beim Ende des Schließens des Ventils aufweist.

7. Ventilmechanik nach einem der Ansprüche 1 -6, dadurch gekennzeichnet, daß jeder Teller (2, 5; 21) mittels Wellen (8, 9; 25, 26) in im Gehäuse (6) vorhandenen Nuten (1; 23, 24) geführt ist.

8. Ventilmechanik nach einem der Ansprüche 2 -7, dadurch gekennzeichnet, daß zwei Teller (2, 5) an gegenüberliegenden Seiten der Mittelplatte (3) vorgesehen sind.

9. Ventilmechanik nach einem der Ansprüche 2 -6, dadurch gekennzeichnet, daß ein Teller (21) an einer Seite der Mittelplatte (3) vorgesehen ist.

10. Ventilmechanik nach einem der Ansprüche 2 -9, dadurch gekennzeichnet, daß die Mittelplatte (3) gegenüber dem Gehäuse (6) geführt ist.

11. Ventilmechanik nach einem der Ansprüche 3 - 10, dadurch gekennzeichnet, daß an den Berührstellen der Einzelteile (7, 8, 9, 12, 13, 22, 23, 24, 25, 26) der Kulissenführung eine Beschichtung und/oder Lager (11) vorgesehen sind.

## Claims

1. Valve mechanism, wherein one or more movable plates (2, 5, 21) are provided for sealing a valve and in relation to the seat surface of the valve substantially parallel (15, 16) and perpendicular (17, 18) movements of each plate (2, 5, 21) take place during opening and closing, wherein the movement of the plate (2, 5, 21) in the parallel direction (15, 16) takes place by means of a valve rod (10) and the movement of the plate (2, 5, 21) in the perpendicular direction (17, 18) causes lifting of the plate off the valve seat surface or pressing against the valve seat surface, characterised in that for the movement of the plate (2, 5, 21) in the perpendicular direction (17, 18) there is provided a connecting link guide (1, 7, 8, 9, 12, 14, 23, 24, 25, 26) which consists of a pin and groove connection directly or indirectly between valve rod and plate (2, 5, 21).

2. Valve mechanism according to claim 1, characterised in that a movable centre plate (3) is provided for displacement of the plate or plates (2, 5; 21).

3. Valve mechanism according to claim 2, characterised in that the centre plate (3) engages by one or more pins (7; 25) in associated grooves (12, 13) of each plate (2, 5; 21).

4. Valve mechanism according to claim 3, characterised in that the grooves (12, 13) of each plate (2, 5; 21) are inclined in relation to the direction of displacement (15, 16) of the centre plate (3).

5. Valve mechanism according to either of claims 3 and 4, characterised in that the grooves (12, 13) are provided in self-restraining fashion in co-operation with the pins (7; 25) and/or with one or more embossed portions.

6. Valve mechanism according to any one of claims 2 to 5, characterised in that each plate (2, 5; 21) comprises one or more stops (8, 9; 26) for restraining axial displacement thereof in the direction of movement (15, 16) of the centre plate (3) at the beginning of opening and at the end of closing of the valve.

7. Valve mechanism according to any one of claims 1 to 6, characterised in that each plate (2, 5; 21) is guided by means of shafts (8, 9; 25, 26) in grooves (1; 23, 24) present in the housing (6).

8. Valve mechanism according to any one of claims 2 to 7, characterised in that two plates (2, 5) are provided on opposite sides of the centre plate (3).

9. Valve mechanism according to any one of claims 2 to 6, characterised in that one plate (21) is provided on one side of the centre plate (3).

10. Valve mechanism according to any one of claims 2 to 9, characterised in that the centre plate (3) is guided relative to the housing (6).

11. Valve mechanism according to any one of claims 3 to 10, characterised in that at the contact points of the component parts (7, 8, 9, 12, 13, 22, 23, 24, 25, 26) of the connecting link guide are provided a coating and/or bearings (11).

## Revendications

1. Mécanisme de soupape, dans lequel est ou sont prévu(s) un ou plusieurs plateau(x) mobile(s) (2, 5, 21) destiné(s) à fermer une soupape de manière étanche, et où, pendant l'ouverture et la fermeture, il se produit des déplacements sensiblement parallèles (15, 16) et perpendiculaires (17, 18) de chaque plateau (2, 5, 21) par rapport à la surface de siège de la soupape, le déplacement du plateau (2, 5, 21) dans la direction parallèle (15, 16) étant produit au moyen d'une tige de soupape (10) et le déplacement du plateau (2, 5, 21) dans la direction perpendiculaire (17, 18) déterminant le soulèvement du plateau par rapport à la surface de siège de la soupape ou l'application contre la surface de siège de la soupape ;
caractérisé en ce qu'il est prévu, pour le déplacement du plateau (2, 5, 21) dans la direction perpendiculaire (17, 18), un guidage coulissant (1, 7, 8, 9, 12, 14, 23, 24, 25, 26) qui est composé d'une liaison à axes et rainures réalisée directement ou indirectement entre la tige de soupape et le plateau (2, 5, 21).

2. Mécanisme de soupape selon la revendication 1, caractérisé en ce qu'il est prévu une plaque centrale (3) mobile en translation pour la translation du ou des plateau(x) (2, 5 ; 21).

3. Mécanisme de soupape selon la revendication 2, caractérisé en ce que la plaque centrale (3) est en prise par un ou plusieurs axe(s) (7 ; 25) dans des rainures correspondantes (12, 13) de chaque plateau (2, 5 ; 21).

4. Mécanisme de soupape selon la revendication 3, caractérisé en ce que les rainures (12, 13) de chaque plateau (2, 5 ; 21) sont inclinées par rapport à la direction de translation (15, 16) de la plaque centrale (3).

5. Mécanisme de soupape selon l'une des revendications 3 et 4, caractérisé en ce que les rainures (12, 13) sont autobloquantes dans leur coopération avec les axes (7 ; 25) et/ou munies d'un ou plusieurs éléments de verrouillage.

6. Mécanisme de soupape selon l'une des revendications 2-5, caractérisé en ce que chaque plateau (2, 5 ; 21) présente une ou plusieurs butée(s) (8, 9 ; 26) servant à interdire sa translation axiale parallèlement à la direction de déplacement (15, 16) de la plaque centrale (3) au début de l'ouverture et à la fin de la fermeture de la soupape.

7. Mécanisme de soupape selon l'une des revendications 1-6, caractérisé en ce que chaque plateau (2, 5 ; 21) est guidé au moyen d'arbres (8, 9 ; 25, 26) dans des rainures (1 ; 23, 24) présentes dans le boîtier (6).

8. Mécanisme de soupape selon l'une des revendications 2-7, caractérisé en ce qu'il est prévu deux plateaux (2, 5) sur des côtés opposés de la plaque centrale (3).

9. Mécanisme de soupape selon l'une des revendications 2-6, caractérisé en ce qu'il est prévu un plateau (21) d'un côté de la plaque centrale (3).

10. Mécanisme de soupape selon l'une des revendications 2-9, caractérisé en ce que la plaque centrale (3) est guidée par rapport au boîtier (6).

11. Mécanisme de soupape selon l'une des revendications 3-10, caractérisé en ce qu'un revêtement et/ou un palier (11) est ou sont prévu(s) dans les zones de contact des éléments (7, 8, 9, 12, 13, 22, 23, 24, 25, 26) du guidage coulissant.
